# EUROPEAN PATENT APPLICATION

(11) **EP 2 241 493 A1**
(43) Date of publication of application: **20.10.2010**
(21) Application number: 09425145.1
(22) Date of filing: 17.04.2009
(51) Int. Cl.: B62B 13/12

(54) **Sled**

(71) Applicant: Paganoni, Giampietro, 24020 Fiorano al Serio (BG) (IT)
(72) Inventor: Paganoni, Giampietro, 24020 Fiorano al Serio (BG) (IT)
(74) Representative: Gislon, Gabriele

(57) **Abstract**

A sled for transporting people, in particular the disabled, comprises a plurality of skis or other elements (7a - 7c, 40a - 40c) for translation with respect to the ground, a support structure (2) provided with a seat (3), means (4) to support the limbs of the user, means (9) to steer the sled, means to support a passenger (6, 28, 29), separate from the seat (3) and from the skis, and connection element or base (20) to which the support structure (2) and at least one of the translation elements are constrained in an oscillating manner to take inclined positions with respect to the base connecting element (20).

## Description

The present invention relates to a sled. In particular, the invention relates to a sled for the disabled provided with skis, or wheels, and also provided with means to transport a passenger.

There are known in the art various types of devices provided with skis to be used in alternative to skis and to snowboards. For example, the patent USA 1968975 describes a "snow scooter" provided with two short skis and a handlebar; a more technologically developed version is described in EP-A-1839992, by the same inventor of the present application.

Devices such as "ski bikes" have also been known for some time; these are devices similar to bicycles without transmission members and provided with short skis in place of wheels; a recent example of a device of this type is described in US D446474. These devices have also be adapted to allow use by the disabled; preferred devices are in the form of "ski bikes" and sleds, according to the degree of disability of the user. For example, ski bikes have been provided with two rear skis in place of a single central ski, sleds provided with one or more skis extending for the length of the device have also been proposed, such as in CA 2113216.

In actual fact, ski bike type devices, even if provided with two rear skis, can only be used by people with a reduced degree of disability, such as those with one amputated leg. Those with more serious disabilities must use a sled. The present invention relates to a device of the sled type.

Known sleds for the disabled are provided with a seat and one or two skis arranged centrally to the sled and which extend for the length thereof. These devices have the drawback of being difficult to manoeuvre and of not curving or of curving with difficulty, especially when a passenger acting as companion is present.

The object of the present invention is to solve the aforesaid problem and provide a sled capable of curving and of transporting a companion, and which can also transport a person with severe disabilities.

This object is achieved by means of the present invention which relates to a sled device characterized according to claim 1.

According to the present invention, the sled comprises a support structure, a seat, means to support one or more limbs of the user, means to guide the sled and a plurality of elements for translation of the sled with respect to the ground selected from skis and wheels, and is characterized in that it comprises at least three of said translation elements constrained to said support structure, and means to support a passenger, said means being separate from said translation elements and being constrained to said support structure.

In an alternative embodiment, the skis are replaced by the same number of wheels, for use on grass or on a dirt road.

In a preferred embodiment, the sled comprises one front ski or wheel and two rear skis or wheels, with respect to the seat.

According to an aspect of the invention, the means to support the passenger comprise at least one footboard, positioned behind the seat; preferably two separate footboards are present. These footboards are mounted on brackets or forks which in turn are connected to said rear skis or wheels and can move, or oscillate, with brackets or forks and skis with respect to the support structure. According to a preferred aspect of the invention, the footboards are pivoted to a tubular element fixed to said support structure and oscillate with respect thereto to take inclined positions with respect to said support structure. Preferably, arms or similar means are present to transmit, from one footboard to the other, inclination with respect to the support structure, so that the skis are inclined in substantially the same manner to each other.

The invention presents numerous advantages with respect to prior art.

The presence of at least three skis and of a seat with support for the lower limbs allows an adequate level of safety to be provided for the user. The presence of a footboard to support the passenger acting as companion allows even the seriously disabled to use the device and at least some ski-lifts to be used.

Moreover, the presence of the footboard, or preferably of two footboards, separate with respect to the skis (or wheels) and preferably connected thereto by means of brackets or forks or supports, leads to the unexpected advantage of being able to set even tight curves. In fact, not only is the passenger no longer positioned on the backs of the skis, as in conventional sleds and devices for the disabled known in the art, but the passenger can also contribute to driving the sled by moving his/her weight uphill or downhill together with the disabled person.

These and other advantages will be apparent from the following description and from the accompanying drawings, illustrated by way of non-limiting example, wherein:
- Figure 1 is a perspective view of the sled according to the present invention;
- Figure 2 is a view of the rear part of the sled according to the present invention;
- Figure 3 is a side view of the sled according to the present invention;
- Figure 4 shows a detail of the base element of the sled according to the present invention;
- Figure 5 is a further detailed view of the base element of the sled according to the present invention;
- Figure 6 is a perspective view of the sled equipped with wheels for use on ground without snow.

The following description will refer to an embodiment provided with skis, without however wishing to limit the scope of protection of the present application.

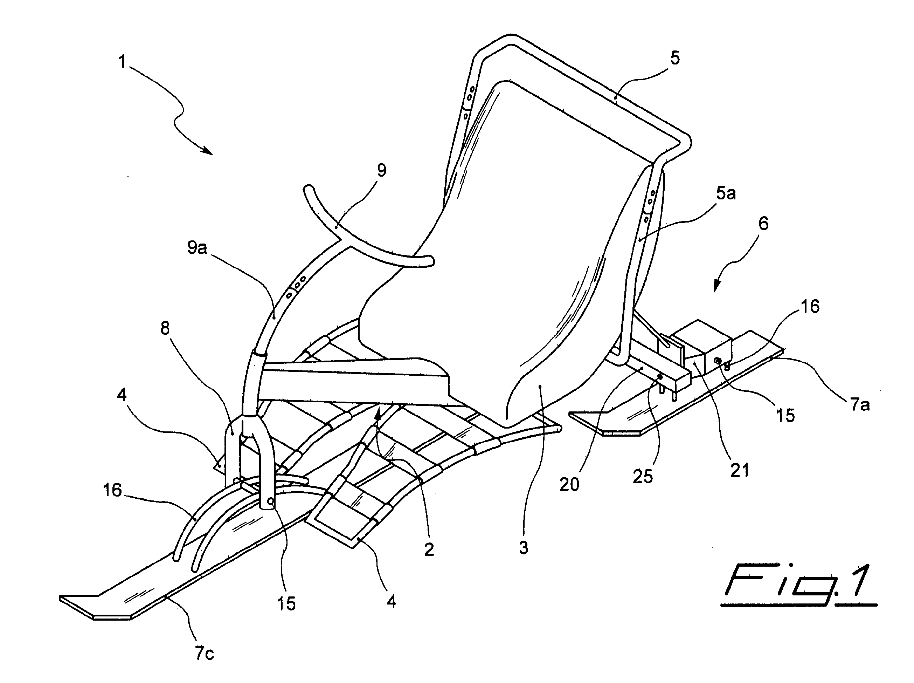

Firstly with reference to Figure 1, the sled 1 according to the present invention comprises a support structure 2, such as a tubular element, to which a seat 3 is constrained, means 4 to support the lower limbs and a handle 5 positioned behind the seat 3. The means 4 are, for example, a frame provided with belts 4a, mesh or similar devices to support the legs.

Moreover, behind the seat 3 there are means 6 to support a passenger standing and two rear support and translation elements, constituted by the skis 7a and 7b. A third translation element, the ski 7c, is arranged in front of the seat 3, mounted on a fork 8 connected to a steering handlebar 9. Brake means (not shown in the accompanying figures) are mounted on the handlebar, such as the means described in the aforesaid application EP 1839992, incorporated herein for reference, in particular to figures 1, 5 and 6 and to paragraphs [0019] to [0022]. In the present case, the rear brakes will be arranged on both rear skis 7a and 7b and comprise brake levers which can be operated by a cable extending to a typical bicycle brake control, positioned on the handlebar. In an embodiment, the brake levers are positioned on the sides of the ski and are joined by a cross-member connected to the brake operating cable. The brake levers are constrained in a rotatable manner around a bush which allows oscillation thereof along a transverse axis with respect to the ski, by means of a fixed lever which is associated with the bush and acts as abutment for the sheath of the brake operating cable. Elastic means, for example constituted by of a spring, act between the fixed lever and the cross-member and allow the brake levers to be maintained normally in a raised position, i.e. a non-braking position. Following operation of the brake by means of the typical bicycle control positioned on the handlebar 9, the operating cable overcomes the opposing force of the spring and allows oscillation of the brake levers until reaching a position of engagement with the snow. The seat 3 and the means 4 to support the lower limbs are preferably provided with safety belts, or similar means known in the art and not shown here, to constrain the disabled user to the sled and prevent him/her from falling off during use.

In the preferred embodiment, the handlebar 9 is extensible and retractable in a fixed portion 9a, where it can be constrained in a known manner, for example through a nut and bolt, at different heights so that it can adopt different positions. In fact, in the case in which the user has difficulty in using his/her upper limbs, the handlebar 9 is extended over the seat 3 in a position (not shown in the figures) in which it can be controlled easily by the passenger standing on the support means 6 in the rear part with respect to the seat 3.

In the case in which the user is able to control the handlebar 9, this is set in the most appropriate retracted position (i.e. the one position in the accompanying figures), while the passenger grips the handle 5 arranged behind the seat 3.

Preferably, the handle 5 is also extensible and retractable in the same manner as stated above for the handlebar 9, so that it can be adjusted as a function of the height of the passenger-companion and can be lowered when the passenger-companion is required to grip the handlebar 9, after extension thereof; for this purpose the handle 5 can slide in a fixed portion 5a and can be constrained thereto in a plurality of positions.

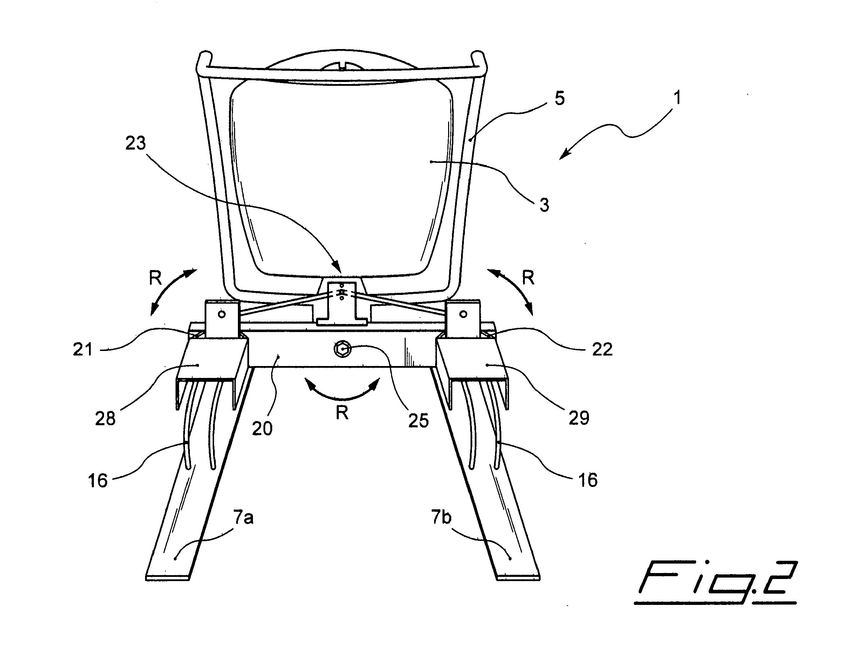

As can be seen in Figure 2, which shows the rear part of the sled according to the present invention, the skis 7a and 7b are constrained to a base connecting element 20, by means of a fork 21 and 22.

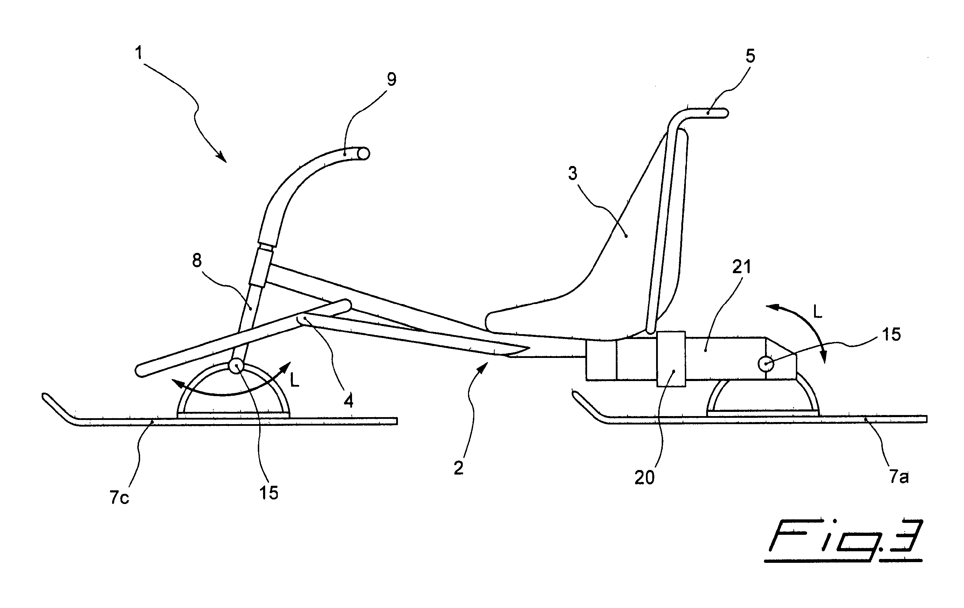

In fact, the rear skis 7a and 7b are pivoted to the forks 21 and 22 by means of a bracket 16 and a pivot 15, around which the skis can rotate in a plane perpendicular to the axis of the pivot 15, as indicated by the arrow L of Figure 3.

The front ski 7c is also pivoted to the fork 8 of the handlebar 9 by means of a bracket 16 and of a pivot 15, around which the ski can rotate in a plane perpendicular to the axis of the pivot 15.

The support means 6, i.e. the footboards, for the feet of the passenger are separate from the skis 7a and 7b and, in the embodiment shown, are constituted by two footboards 28 and 29, having an inverted U-shaped cross section, arranged on the upper part of the forks 21 and 22; in this manner, the passenger accompanying the user standing behind the seat 3 does not place his/her feet directly on the rear skis 7a and 7b.

The footboards 28, 29 are constrained in a removable manner, for example by means of a bolt, to the arms of the corresponding fork 21, 22; the support structure 2 of the sled is also constrained to the base element, or cross-member 20, by means of a plate 23.

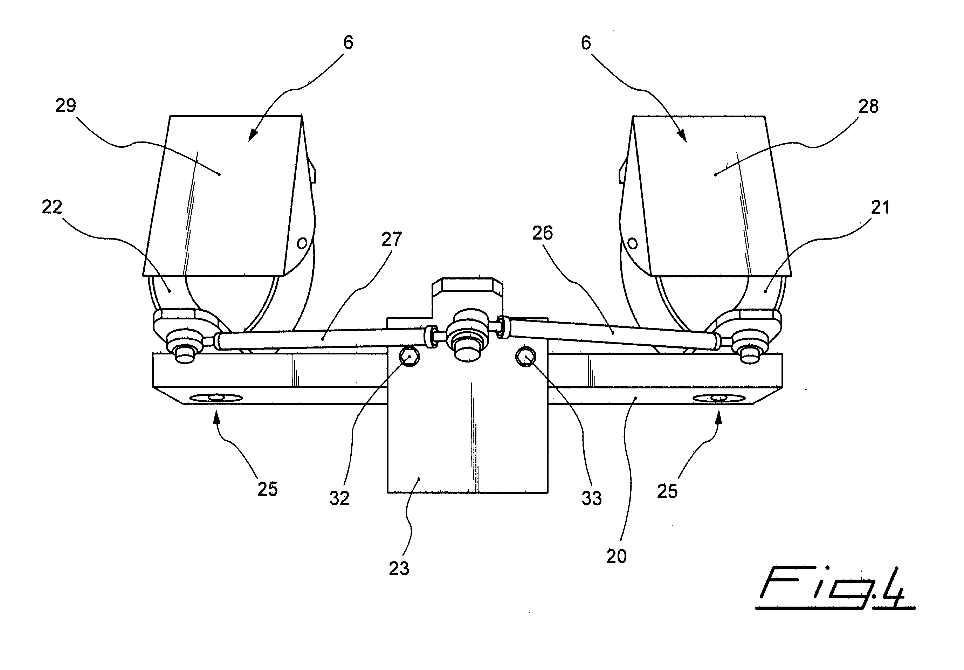

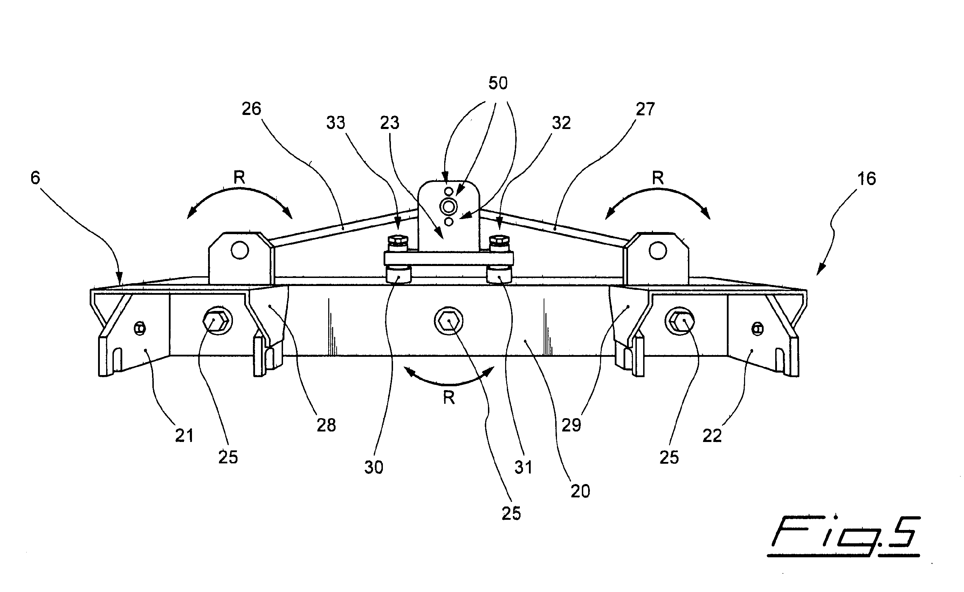

As will be described in more detail below, with particular reference to Figures 4 and 5, the rear skis 7a and 7b constrained to the forks 21 and 22 and the support structure 2 constrained to the plate 23, are mounted so that they can oscillate, or vary the inclination thereof with respect to the base connecting element 20.

Figures 4 and 5 show in detail the base connecting element 20, or cross-member, to which the support structure 2 and the two rear skis 7a, 7b are constrained in an oscillating manner.

With the term "constrained in an oscillating manner" it is meant that the method of constraining the rear translation elements 7a, 7b and the support structure 2 allows inclined positions to be taken with respect to the base connecting element 20.

In other words, the constraining means allow the rear skis 7a and 7b and the support structure 2 to change their inclination with respect to the base connecting element 20 to which they are constrained.

In fact, the two forks 21 and 22 and the plate 23 can oscillate with respect to the base element 20 by means of suitable constraining means constituted by three bolts 25 rotatably mounted, for example on corresponding ball bearings, not shown in the figures.

Rotation around the axis defined by the bolt 25 allows variation of the inclination (oscillation) of the forks 21 and 22 and of the plate 23 with respect to the base element 20, as indicated by the arrows R in Figures 2 and 5. Naturally, it would also be possible to use other known constraining means, which allow the forks 21, 22 and the plate 23 to be pivoted, or constrained in an oscillating manner, to the base connecting element 20.

As can be seen in particular with reference to Figure 5, oscillation of the plate 23 and of the support structure 2 constrained thereto with respect to the base element 20 is limited and regulated by means of a plurality of elastic elements 30 and 31, which act as shock absorbers, and of a plurality of adjustment screws 32 and 33.

The elastic elements 30 and 31 are arranged between the lower part of the plate 23 and the upper part of the base element 20, so that following oscillation of the plate around the bolt 25 to take a position inclined with respect to the base element, the elastic elements limit the maximum inclination that can be reached and simultaneously provide an opposing elastic force during the compression transient.

In the embodiment shown in Figure 5 the elastic elements are constituted by two disks 30, 31, made of an elastic material such as elastomer. The disks 30 and 31 are arranged laterally, in a symmetrical manner, with respect to the bolt 25 which allows oscillation of the plate 23, and of the support structure 2 constrained thereto, with respect to the base element 20. According to the side towards which inclination of the support structure 2 of the sled is required to be varied, for example to set a curve, the elastic element of the side towards which the weight is shifting will be compressed. The disks 30, 31 perform a function similar to that of two shock absorbers and prevent the plate 23 from abutting against the base element 20 when the inclination of the support structure 2 is changed, for example to set a curve or at least to perform a change in the direction of the trajectory.

The adjustment screws 32 and 33, which can be operated manually, allow adjustment of the position of maximum inclination that the plate 23 and the support structure 2 can reach with respect to the base connecting element 20.

Other known elastic means, such as a pair of springs, can be used without departing from the scope of protection of the present invention.

In the embodiment of the sled shown in the accompanying figures, the forks 21 and 22, constrained in an oscillating manner to the base element 20, are mutually interconnected so as to oscillate by a same arc around their respective pivots; alternatively, in an embodiment not shown in the accompanying figures, the forks are independent from each other. Moreover, in the embodiment shown, the forks are also connected to the support structure 2, which is also mounted oscillating on the connecting element, or base, 20. In this manner, seat and fork rotate, or oscillate, together, with the advantage of improving and facilitating the curves of the skis or states 7a-7c. In Figures 4 and 5, the forks 21, 22 are connected to the plate 23 by means of rigid connection means, constituted, for example, by tie-rods 26 and 27. In this embodiment, oscillation of the support structure 2 and of the rear skis 7a and 7b with respect to the base element 20 is not independent, as the forks 21 and 22 of the rear skis are constrained rigidly to the plate 23 and therefore to the support structure 2.

Consequently, the inclination reached by the support structure 2 and by the seat 3 of the sled, for example while setting a curve, is given by the inclination of the rear skis 7a and 7b, and vice versa.

Rigid transmission of the inclination between the plate 23 and the two forks 21 and 22 by means of the tie rods 26 and 27 can be regulated. In fact, the plate 23 is provided with three holes 50 to which the tie-rods 26 and 27 can be constrained.

In this manner, an angle of rotation of both the forks 21 and 22 around the respective bolts 25, will correspond to a specific angle of rotation of the plate 23 around the bolts 25, accentuated to a greater or lesser degree depending on the hole 50 to which the tie-rods 26 and 27 are constrained.

As stated, in a further possible embodiment of the sled, the forks 21 and 22 are independent so that the rear skis 7a and 7b connected thereto can oscillate with respect to the base element 20 independently from each other and independently with respect to the support structure 2 of the sled. Advantageously, the sled according to the present invention ensures correct steering during curves and during changes in trajectory, as the user can move his/her weight inclining the support structure 2 with respect to the base element 20.

In fact, the seat 3, constrained to the support structure 2, can be inclined laterally with respect to the direction of advance so that the weight of the user can be correctly shifted to facilitate setting of curves and ensure an adequate level of safety for the entire period of use.

As mentioned, the rear translation elements 7a and 7b can also oscillate, i.e. they can be inclined with respect to the base connecting element 20 allowing the passenger-companion to move his/her weight in an appropriate manner in order to set curves correctly, as if skiing on two normal skis.

In fact, the passenger accompanying the user remains standing on the support footboards 28 and 29 which are constrained to the forks 21 and 22 of the rear translation elements 7a and 7b and which therefore move therewith. On a curve, the passenger moves his/her weight on the footboards 28 and 29 causing oscillation of the skis 7a and 7b which are constrained to the forks 21 and 22, allowing the inclined position required to set a curve, or to change direction, to be reached. As the skis are connected to each other and to the structure 2 by means of the plate 23, when the skis are inclined, the structure 2 and consequently the seat 3, its user and the front ski 7c reach a substantially corresponding inclination.

Moreover, the changes in trajectory can also make use (in particular with flat skis) of the rotation of the handlebar 9 and of the front ski 7a constrained thereto, by the user, or by the passenger gripping the handlebar in the extended position, if the user is unable to operate it.

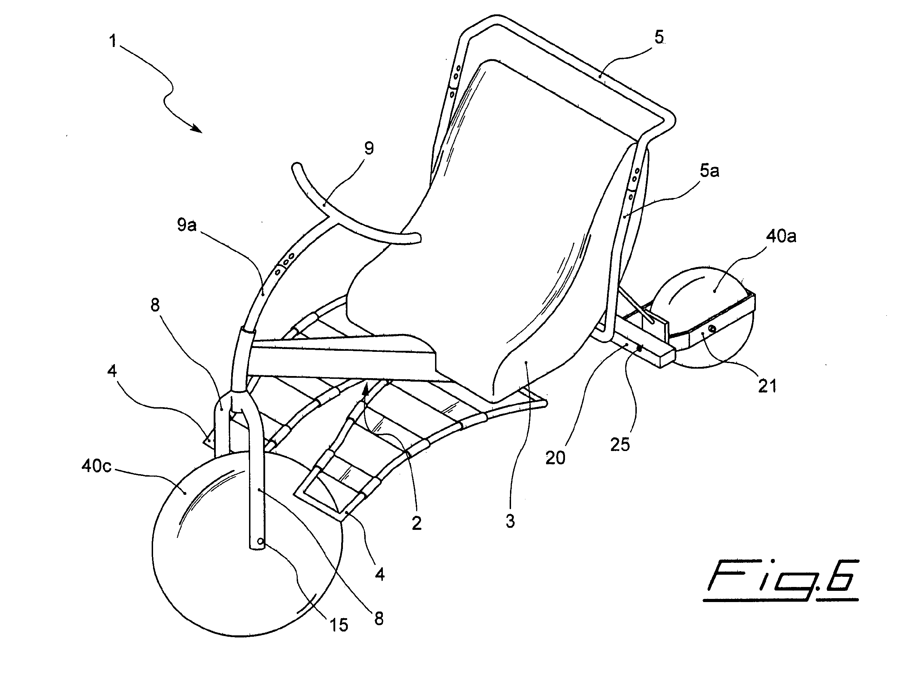

Figure 6 shows a perspective view of an embodiment of the present invention in which the sled is provided with wheels 40a - 40c in order to allow use thereof on ground without snow, such as on grass.

As can be seen from the figure, the front wheel 40c is pivoted to the end fork 8 of the handlebar 9 in place of the front ski 7c, while the rear wheels 40a and 40b are pivoted to the forks 21 and 22 in place of the rear skis 7a and 7b.

Operation of the sled is substantially the same as previously described in relation to the embodiment provided with skis as translation element, with the sole exception of the braking means, which use the operating cable of the sled to control adequate means movable from a position engaged with the wheel to a position disengaged therefrom.

Unlike the embodiment provided with skis, the support means for the passenger, and in particular the footboards 28 and 29, are preferably not constrained to the upper part of the forks 21 and 22, as they must allow passage of the rear wheels 40a and 40b. For this reason, the footboards 28 and 29 are constrained in a cantilevered position to the inner arm of the forks 21 and 22, and can therefore oscillate with respect to the base element 20.

In this embodiment, it is also possible for only one footboard to be present, mounted centrally on the base 20, and for the forks of the wheels to be mounted without oscillation but with appropriate convergence.

## Claims

1. A sled for transporting people, comprising a plurality of elements (7a - 7c, 40a - 40c) for translation of the sled with respect to the ground and a support structure (2), provided with a seat (3), means (4) to support one or more limbs of the user and means (9) to steer said sled, **characterized in that** it comprises means to support a passenger (6, 28, 29), said means being separate from said seat (3) and from said translation elements (7a - 7c, 40a - 40c).

2. A sled according to claim 1, also comprising a base connecting element (20) to which said support structure (2) and at least one of said translation elements are constrained in an oscillating manner to take inclined positions with respect to said base connecting element (20).

3. A sled according to claim 2, wherein said support structure (2) is connected to a plate (23) constrained in an oscillating manner to said base connecting element (20).

4. A sled according to claim 1 or 2, comprising a front ski (7c) or wheel (40c) and two rear skis (7a, 7b) or wheels (40a, 40b) with respect to the seat (3).

5. A sled according to claim 4, wherein each of said rear skis (7a, 7b) or wheels (40a, 40b) is constrained to a fork (21, 22) constrained in an oscillating manner to said base connecting element (20) to takes said inclined positions with respect to said base connecting element (20).

6. A sled according to one of the preceding claims, wherein said means to support the passenger comprise at least one footboard (28, 29), positioned behind the seat (3).

7. A sled according to claim 5 or 6, wherein said footboard or footboards (28, 29) are connected to said forks (21, 22) and are movable with said rear skis (7a, 7b) or wheels (40a, 40b) with respect to said base connecting element (20).

8. A sled according to claim 7, also comprising rigid connection means (26, 27) to transmit said inclination between said support structure (2) and said footboards (28, 29).

9. A sled according to claim 8, wherein said rigid connection means (26, 27) include at least one tie rod (26, 27) for connection of each of said forks (21, 22) to said plate (23).

10. A sled according to one of claims 3 to 9, comprising at least one elastic element (30, 31) arranged between said plate and said base element (20) to adjust the degree of inclination of said support structure (2) with respect to said base element (20).

11. A sled according to claim 10, wherein said elastic elements are two disks (30, 31) made of elastic material arranged symmetrically with respect to the point in which said plate (2) is constrained in an oscillating manner to said base connecting element (20).

12. A sled according to one of claims 3 to 11, also comprising means (32, 33) to adjust the maximum inclination of said plate (23) with respect to said base connecting element (20).

13. A sled according to one of the preceding claims, also comprising a handle or support bar (5) for the passenger, said handle or bar being extensible and retractable in a fixed portion (5a).

14. A sled according to one of the preceding claims, wherein said means for steering the sled comprise a front handlebar (9), said handlebar being extensible and retractable in a fixed portion (9a).
